Europäisches Patentamt

European Patent Office

Office européen des brevets

(19)

(11) Publication number: **0 320 199**
**A1**

## (12) EUROPEAN PATENT APPLICATION

(21) Application number: **88311527.1**

(22) Date of filing: **06.12.88**

(51) Int. Cl.4: **A47C 9/06 , B60N 1/10**

(30) Priority: **08.12.87 GB 8728692**

(43) Date of publication of application:
**14.06.89 Bulletin 89/24**

(84) Designated Contracting States:
**BE CH DE ES FR GB IT LI**

(71) Applicant: **Land Rover UK Limited**
**11 Strand**
**London WC2N 5JT(GB)**

(72) Inventor: **Brogan, Michael**
**Stones Cottage Pound Lane**
**West Wittering West Sussex(GB)**

(74) Representative: **Burrage, David John**
**The Rover Group plc Patent & Trademark**
**Department Cowley Body Plant Cowley**
**GB-Oxford OX4 5NL(GB)**

(54) **Folding seat.**

(57) A folding seat comprises a vertical support (1), a cushion (2), a first crank (3) attached to the cushion at a point towards the support end and to the support at a position below the level of the cushion when the seat is folded out and a second crank (4) attached to the cushion (2) at a point further from its support end than the first crank (3) and to the support (1) at a point above the level of the cushion when the seat is folded out.

Fig. 2

EP 0 320 199 A1

## FOLDING SEAT

The present invention relates to a folding seat.

Folding seats, in which the seat cushion folds against the squab, are commonly used in a number of applications where space is at a premium. One example of the use of folding seats is in vehicles, for example in the luggage areas of large estate cars and vans.

The present invention allows a simple seat that folds away in a tidy and compact fashion.

According to the present invention there is provided a folding seat comprising a vertical support, a cushion, a first crank attached to the cushion at a point towards the support end and to the support at a position below the level of the cushion when the seat is folded out and a second crank attached to the cushion at a point further from its support end than the first crank and to the support at a point above the level of the cushion when the seat is folded out.

In an embodiment of the invention the seat also includes a squab pivotally attached to the support end of the cushion.

In a further embodiment of the invention the squab is constrained to remain upright when the seat is folded or unfolded.

The seat may include ground support means pivotally connected to the cushion to to provide added stability to the seat when occupied.

For ease of unfolding the seat the ground support means may be biasable into contact with a given ground position when the seat is unfolded, and preferably the ground support means, which is conveniently a leg or legs, will have a catch to hold it adjacent the cushion when the seat is folded and which is releasable as the seat is being unfolded to allow the biasing means, which may be a spring or gas strut for example, to operate and swing the ground support means down into an exact position on the ground to support the unfolded seat.

The invention will now be described by way of example with reference to the accompanying drawings, in which:

Figure 1 shows a seat embodying the invention in a folded position

Figure 2 shows the same seat in a folded out position

Figure 3 shows a second seat embodying the invention and

Figure 4 shows another seat embodying the invention.

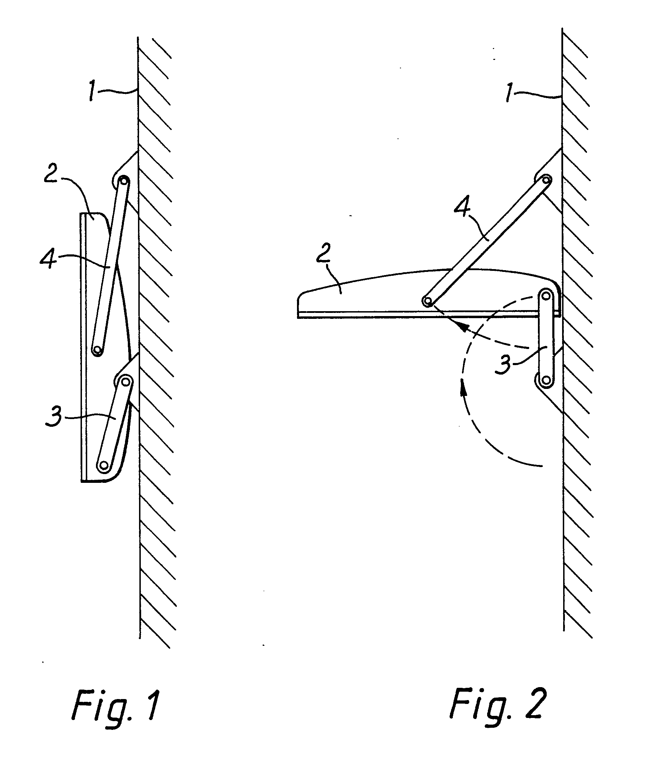

Figure 1 shows a seat embodying the invention. The seat comprises a support 1 to which is attached a cushion 2 by first and second cranks 3 and 4.

The first crank 3 is attached to the cushion at a point near to the end of the cushion that will be adjacent the support when the seat 15 folded out ("the support end") and is attached to the support at a point below the level of the cushion when the seat is folded out. The second crank 4 is attached to the cushion at a point further from the support end than the first crank and to the support at a point above the level of the cushion when the seat is folded out. This arrangement allows a stable seat that folds away into a low position.

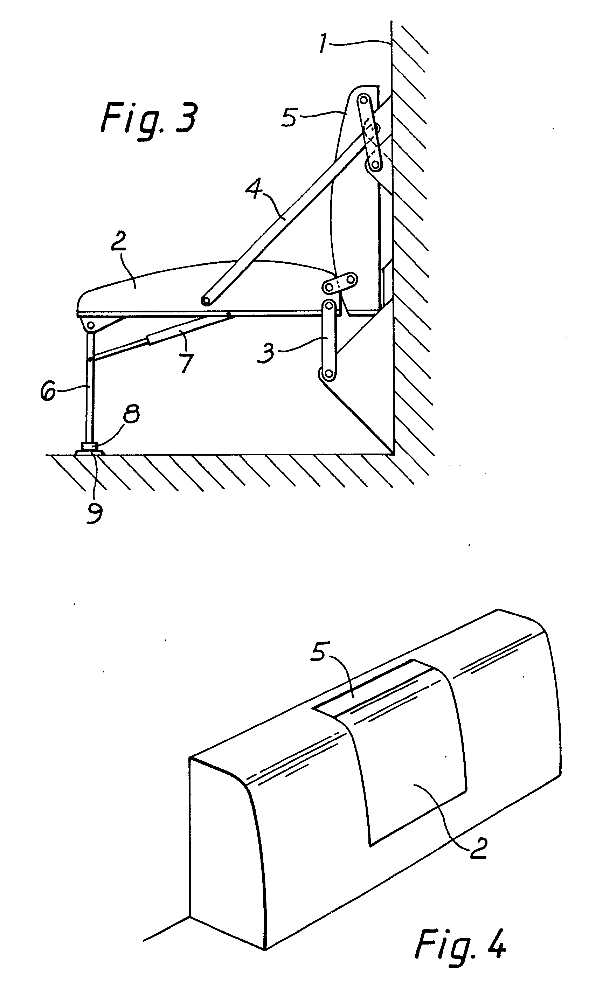

Figure 3 shows another embodiment of the invention, the same reference numerals being used to indicate the same integers. In this embodiment the seat includes a squab 5 pivotally attached to the cushion which is moved upwards when the seat is folded out. In the example the squab is attached to the support by cranks, although it could be guided by other means, such as pegs running in grooves. The cranks holding the squab may be selectively releasable to allow the squab to be folded onto the cushion to form a horizontal surface such as an occasional table.

Also shown in Figure 3 is ground support means in the form of a pair of legs 6 pivotable so as to stow adjacent the cushion 2 when the seat is folded away but to swing down automatically into the position shown in Figure 3 by the action of a strut 7 to support the seat cushion 2 when the seat is occupied. Feet 8 on the end of each leg 6 are positioned by the strut 7 so as to locate on positions 9 on the ground or floor adapted to receive them.

The underside of the seat cushion and the top of the squab may be designed to match with one another and with the surrounding trim to form an unobtrusive front to the seat when it is folded away. The seat may also fold into a false bulkhead, as shown in Figure 4.

## Claims

1. A folding seat comprising a vertical support (1), a cushion (2) and crank means (3, 4) to fold the seat, characterised in that the seat includes a first crank (3) attached to the cushion (2) at a point towards the support end and to the support (1) at a position below the level of the cushion when the seat is folded out and a second crank (4) attached to the cushion at a point further from its support end than the first crank (1) and to the support (1) at a point above the level of the cushion when the seat is folded out.

2. A seat as claimed in claim 1 further including a squab (5) pivotally attached to the support end of the cushion.

3. A seat as claimed in claim 1 or 2 wherein the squab (5) is constrained to remain upright when the seat is folded or unfolded.

4. A seat as claimed in claim 1, 2 or 3 wherein the seat includes ground support means (6) pivotally connected to the cushion (2).

5. A seat as claimed in claim 4 wherein the ground support means (6) are biasable into contact with a given ground position when the seat is unfolded.

Fig. 1

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-1 732 782 (WASMUTH)<br>* Page 1, lines 35-66; figures *<br>--- | 1 | A 47 C 9/06<br>B 60 N 1/10 |
| A | US-A-3 600 033 (HOLDAMPF)<br>* Column 1, line 51 - column 2, line 27; figures *<br>--- | 2,3,4 | |
| A | US-A-1 698 036 (TRAMMELL)<br>* Page 1, lines 47-50; figures *<br>--- | 2,3 | |
| A | DE-U-8 424 854 (KÜBLER)<br>* Page 5, lines 13-21; figures *<br>----- | 4,5 | |

TECHNICAL FIELDS
SEARCHED (Int. Cl.4)

A 47 C
B 60 N

The present search report has been drawn up for all claims

| Place of search | Date of completion of the search | Examiner |
|---|---|---|
| THE HAGUE | 07-03-1989 | VANDEVONDELE J.P.H. |